# EUROPÄISCHE PATENTSCHRIFT

(11) **EP 2 350 157 B1**
(45) Veröffentlichungstag und Bekanntmachung des Hinweises auf die Patenterteilung: **20.03.2013**
(21) Anmeldenummer: 09736948.2
(22) Anmeldetag: 19.10.2009
(51) Int. Cl.: C08G 18/36, C08G 18/48, C08G 18/50, C08G 18/66

(54) **VERFAHREN ZUR HERSTELLUNG VON VISKOELASTISCHEN POLYURETHAN-WEICHSCHAUMSTOFFEN**
METHOD FOR PRODUCING VISCOELASTIC POLYURETHANE FLEXIBLE FOAMS
PROCÉDÉ DE FABRICATION DE MATÉRIAUX EXPANSÉS SOUPLES DE POLYURÉTHANE, VISCOÉLASTIQUES

(30) Priorität: 24.10.2008 EP 08167561
(43) Veröffentlichungstag der Anmeldung: 03.08.2011
(73) Patentinhaber: BASF SE, 67056 Ludwigshafen (DE)
(72) Erfinder: FRERICKS, Ansgar, 48488 Emsbüren (DE); LUTTER, Heinz-Dieter, 49459 Lembruch (DE); STADLER, Edmund, 96142 Hollfeld (DE); SCHRÖDER, Heinz-Jürgen, 01979 Lauchhammer (DE); SIMON, Kirsten, 27330 Asendorf (DE); MEYER, Andre, 49448 Lemförde (DE); POMERIS, Franck, F-77700 Magny Le Hongre (FR)
(86) Internationale Anmeldenummer: PCT/EP2009/063633
(87) Internationale Veröffentlichungsnummer: WO 2010/046326

(56) Entgegenhaltungen:
- WO-A-2007/085548
- WO-A-2007/111834
- ZHANG ET AL: "Substituting soybean oil-based polyol into polyurethane flexible foams" POLYMER, ELSEVIER SCIENCE PUBLISHERS B.V, GB, Bd. 48, Nr. 22, 12. Oktober 2007 (2007-10-12), Seiten 6656-6667, XP022297407 ISSN: 0032-3861

## Beschreibung

Gegenstand der Erfindung ist ein Verfahren zur Herstellung von viskoelastischen Polyurethan-Weichschaumstoffen durch Umsetzung von Polyisocyanaten mit Verbindungen mit mindestens zwei mit Isocyanatgruppen reaktiven Wasserstoffatomen.

Viskoelastische Polyurethan-Weichschaumstoffe erlangen in den letzten Jahren eine immer größere Bedeutung. Ihr Einsatz erfolgt insbesondere zur Herstellung von Polstern, Matratzen oder zur Schwingungsdämpfung, beispielsweise bei der Teppichhinterschäumung.

Im Rahmen dieser Erfindung wird ein Schaumstoff als viskoelastisch bezeichnet, wenn er im Torsionsschwingungsversuch nach DIN 53445 einen Verlustfaktor tan Delta bei 25°C von mehr als 0,15, bevorzugt mehr als 0,2 aufweist. Ferner ist bevorzugt, dass die erfindungsgemäßen Schaumstoffe über einen breiten Temperaturbereich, d.h. von - 20°C bis + 50°C, zumindest aber von - 5 bis + 30°C, ein viskoelastisches Verhalten zeigen.

Ebenfalls kann der Schaumstoff als viskoelastisch bezeichnet werden, wenn er eine Rückprallelastizität, gemessen nach DIN EN ISO 8307, von weniger als 30 %, bevorzugt von 5 bis 25 %, besonders bevorzugt von 8 bis 22 % aufweist.

Insbesondere ist es bevorzugt, dass der erfindungsgemäße Schaumstoff sowohl die vorstehend angegebenen Kriterien für den Verlustfaktor als auch für die Rückprallelastizität erfüllt.

Bei den erfindungsgemäßen viskoelastischen Schaumstoffen mit vorstehend beschriebenen Dämpfungskoeffizienten handelt es sich um sogenannte "müde" Schaumstoffe.

Die Einstellung der viskoelastischen Eigenschaften erfolgt vorzugsweise durch die Wahl der Einsatzstoffe, insbesondere der Polyole.

Eine Möglichkeit zur Herstellung von viskoelastischen Schaustoffen ist der Einsatz von Gemischen aus vorzugsweise dreifunktionellen Polyetheralkoholen mit einer Hydroxylzahl von 20 bis 100 und mindestens einem vorzugsweise dreifunktionellen Polyetheralkohol mit einer Hydroxylzahl im Bereich zwischen 160 und 250 und im wesentlichen Propylenoxideinheiten in der Kette.

Nachteilig an derartigen Schaumstoffen ist beispielsweise, insbesondere bei der Verwendung von Toluylendüsocyanat (TDI) als Polyisocyanat, ihre hohe Geschlossenzelligkeit, die zu Problemen bei der Verarbeitung und zu verschlechterten mechanischen Eigenschaften führt.

Weiterhin können die viskoelastischen Eigenschaften dadurch erreicht werden, dass als Verbindungen mit mindestens zwei mit Isocyanatgruppen reaktiven Wasserstoffatomen Gemische aus mindestens einem Polyetheralkohol mit einem hohen Gehalt an Ethylenoxid, vorzugsweise mindestens 50 Gew.-%, und mindestens einem mit diesen Polyetheralkoholen unverträglichen Polyetheralkohol mit einem hohen Gehalt am Propylenoxid, vorzugsweise mindestens 90 Gew.-%, eingesetzt werden.

So beschreibt US 2004/0254256 viskoelastische Schaumstoffe, bei deren Herstellung die Polyolkomponente 30 bis 70 Gew.-Teile eines Polyetheralkohols mit einem hohen Anteil von Ethylenoxideinheiten in der Polyetherkette enthält. EP 1 240 228 beschreibt die Herstellung von viskoelastischen Schaumstoffen unter Verwendung von Polyetheralkoholen, die einen Gehalt an Ethylenoxid in der Polyetherkette von mindestens 50 Gew.-% und eine Hydroxylzahl im Bereich zwischen 40 und 50 aufweisen.

DE19936481 beschreibt schallabsorbierende, leicht zu verarbeitende weiche PUR-Formschaumstoffe mit einem Verlustfaktor > 0,2, die mindestens ein Rizinusölpolyetherol, hergestellt durch anionische Polymerisation mit beispielsweise Alkalihydroxyden oder kationische Polymerisation von Rizinusöl mit Alkylenoxiden, enthalten. Gegebenenfalls kann reines Rizinusöl zugegeben werden, jedoch maximal 10 %. Nachteilig ist hier, dass nur geringe Mengen reines Rizinusöl verarbeitet werden können. Erst durch die Verwendung der Rizinusölderivate, die in einem zusätzlichen Herstellungsschritt aus Rizinusöl hergestellt werden müssen, wird der Anteil an nachwachsenden Rohstoffen deutlich erhöht. Nachteilig ist ebenfalls, so ist es in WO 04/20497 beschrieben, dass Polyurethan-Weichschaumstoffe, hergestellt aus Polyetheralkoholen auf Basis von nachwachsenden Rohstoffen wie Rizinusöl unter Verwendung basischer Katalysatoren, bezüglich Geruch, Emissionen und Fogging sehr schlechte Eigenschaften zeigen.

DE3316652 beschreibt Formteile aus viskoelastischen Schäumen mit geräuschmindemden Eigenschaften auf der Basis von deutlichen Anteilen Rizinusöl mit einer Materialdichte von mindestens 120 kg/m³, die selbstklebend und daher auf Trägermaterialen aufklebbar sind.

DE 3710731 beschreibt Weichschaumstoffe mit schallisolierenden und entdröhnenden Eigenschaften mit einer Materialdichte von 80-250 kg/m³, die Rizinusöl als Bestandteil enthalten können und vorzugsweise mittels des RIM-Verfahrens (Reaction Injection Moulding) hergestellt werden. Diese Formschaumstoffe weisen einen Verlustfaktor von mindestens 0,4 auf. Sie weisen eine adhäsive Oberfläche auf durch Verarbeitung des Reaktionsgemisches bei einem NCO-Index von ≤ 80.

DE3708961 beschreibt Formschaumstoffe mit geringer Rückprallelastizität, die Rizinusöl enthalten und ohne sekundäre Adhäsionsförderer Adhäsion an lackierten und nichtlackierten metallischen Oberflächen besitzen.

DE-A-19924803 beschreibt Formschaumstoffe mit latexähnlichem Verhalten. Aufgrund von Verlustfaktoren > 0,15 und Rückprallelastizitäten < 30 % können die genannten Schaumstoffe gleichzeitig als viskoelastisch bezeichnet werden. Nachteilig ist hier, dass die beschriebenen Formschaumstoffe eine stark klebrige Oberfläche aufweisen.

DE19634392 beschreibt die Herstellung geschäumter Polyurethan-Formteile unter Verwendung von mindestens 50 Gew.-% Rizinusöl in Kombination mit Kettenverfängerern und/oder Vernetzern mit reaktionsfähigen Hydroxylgruppen. Diese Formteile weisen sehr hohe Steifigkeiten und Stauchhärten auf und sind daher für die üblichen Anwendungen von Weichschaumstoffen nicht geeignet.

Der Markt verlangt aus ökologischen Gründen zunehmend nach Schaumstoffen, die nachwachsende Rohstoffe enthalten. Nachwachsende Rohstoffe können bei der Herstellung von Polyurethanen auch eine Alternative zu petrochemisch hergestellten Ausgangsprodukten sein. Die Schaumstoffe werden zumeist hergestellt durch Verwendung von Hydroxylgruppen enthaltenden Naturstoffen oder Polyolen, die hergestellt werden durch Anlagerung von Alkylenoxiden an diese Verbindungen.

WO 2007/085548 zeigt, wie auf Basis von nachwachsenden Rohstoffen, vorzugsweise Rizinusöl viskoelastische Schäume hergestellt werden können, die einen Verlustfaktor von > 0,15 aufweisen oder eine Rückprallelastizität < 30 % aufweisen. Es ist bevorzugt, dass die Schäume über einen breiten Temperaturbereich viskoelastisches Verhalten zeigen. Nachteilig ist hier, dass lediglich Schaumstoffe nach dem Blockschaumverfahren zugänglich gemacht werden. Für die Anfertigung von Formschaumstoffen ist die Gesamtreaktivität der Einsatzstoffe nicht hinreichend.

WO 2008/003567 beschreibt ein Verfahren zur Herstellung von viskoelastischen Blockschaumstoffen unter Verwendung von Rizinusöl und Polyetheralkoholen mit unterschiedlichen Gehalten an Ethylenoxid in der Polyetherkette. Bei diesem Verfahren werden relativ große Mengen an ethylenoxidarmen und ethylenoxidreichen Polyetheralkoholen eingesetzt. Dies kann zu Verträglichkeitsproblemen in der Polyolkomponente bis hin zur Entmischung, führen.

Aufgabe der vorliegenden Erfindung war es demzufolge, vorzugsweise Polyurethan-Weichschaumstoffe mit viskoelastischen Eigenschaften unter Verwendung von nachwachsenden Rohstoffen bereitzustellen, die weitgehend klebfreie Oberflächen aufweisen. Die Schaumstoffe sollen als Formweichschaumstoffe und als Blockweichschaumstoffe herstellbar sein. Der Anteil an nachwachsenden Rohstoffen in der Polyolkomponente sollte dabei hoch sein, vorzugsweise sollten mindestens 25 Gew.-% des Gewichts des Schaums aus nachwachsenden Rohstoffen bestehen.

Gegenstand der Erfindung ist demzufolge ein Verfahren zur Herstellung von viskoelastischen Polyurethan-Weichschaumstoffen durch Umsetzung von
a) Polyisocyanaten mit
b) Verbindungen mit mindestens zwei mit Isocyanatgruppen reaktiven Wasserstoffatomen, dadurch gekennzeichnet, dass als Verbindungen mit mindestens zwei mit Isocyanatgruppen reaktiven Wasserstoffatomen eine Mischung aus
   bi) 25 bis 70 Gew.-%, bezogen auf das Gewicht der Komponenten bi), bii), biii) und, biv), Rizinusöl.
   bii) 3 bis 30 Gew.-%, bezogen auf das Gewicht der Komponenten bi), bii), biii) und biv), mindestens eines Polyetheralkohols mit einer Hydroxylzahl von 100 bis 800 mg KOH/g und einer Funktionalität von 3 bis 5, das ausgewählt ist aus der Gruppe von Polyetheralkoholen, hergestellt durch Anlagerung von Alkylenoxiden an ein Amin,
   biii) 20-50 Gew.-% bezogen auf das Gewicht der Komponenten bi), bii), biii) und biv), mindestens eines Polyetheralkohols mit einer Hydroxylzahl von 10 bis 80 mg KOH/g und einer Funktionalität von 2 bis 5, herstellbar durch Anlagerung von Ethylenoxid und Propylenoxid an H-funktionelle Startsubstanzen, wobei der Anteil an Ethylenoxid 5-25 Gew.-%, bezogen auf das Gewicht des Polyetheralkohols, beträgt, wobei zumindest ein Teil des Ethylenoxids am Ende der Polyetherkette angelagert ist, enthält,
   biv) >0 - 8 Gew.-% bezogen auf das Gewicht der Komponenten bi), bii), biii) und biv), mindestens eines Polyetheralkohols mit einer Funktionalität von 2-4, einer Hydroxylzahl von 15-60 mg KOH/g und einem Gehalt an Ethylenoxid von >50 Gew.%, bezogen auf das Gewicht des Polyetheralkohols.

Gegenstand der Erfindung sind weiterhin nach diesem Verfahren hergestellte viskoelastische Polyurethan-Weichschaumstoffe.

Als Hydroxylgruppen enthaltende natürliche Öle oder Fette bi) wird Rizinusöl eingesetzt.

Das Rizinusöl kann durch Anlagerung von Alkylenoxiden modifiziert werden. Dabei wird vorzugsweise eine solche Menge an Alkylenoxiden angelagert, dass die Hydroxylzahl des Anlagerungsprodukts 20 - 150 mg KOH/g beträgt. Die Anlagerung der Alkylenoxide kann vorzugsweise unter Verwendung von DMC-Katalysatoren erfolgen.

Vorzugsweise weisen die Verbindungen bi) eine Funktionalität von 2-4 auf. Die Hydroxylzahl der Komponente bi) liegt, wenn kein Alkylenoxid angelagert wurde, vorzugsweise im Bereich von 20-200 mg KOH/g, besonders bevorzugt 100-200 mg KOH/g.

Die Komponente bi) wird vorzugsweise in einer Menge von 30-60 Gew.-%, besonders bevorzugt 40-50 Gew. %, bezogen auf das Gewicht der Komponenten bi), bii), biii) und biv) eingesetzt.

Bei den zur Herstellung der Komponente bii) eingesetzten Aminen handelt es sich zumeist um Diamine. Dabei kann es sich um aliphatische Amine, wie Ethylendiamin, Propylendiamin, oder um aromatische Amine, wie Toluylendiamin (TDA) handeln. Bei Einsatz von TDA werden insbesondere die o-Isomeren, auch als vicinales TDA bezeichnet, eingesetzt.

Bei den Polyetheralkoholen bii) kann es sich um reine Propoxylate handeln. Insbesondere bei der Verwendung von aromatischen Aminen kann auch Ethylenoxid mitverwendet werden. Die Menge des eingesetzten Ethylenoxids liegt dann bevorzugt im Bereich von 2-15 Gew.-%, bezogen auf den Polyetheralkohol.

Die Komponente bii) weist vorzugsweise eine Hydroxylzahl im Bereich von 150 bis 500 mg KOH/g auf.

Die Komponente bii) wird vorzugsweise in einer Menge von 5 bis 25 Gew.-%, besonders bevorzugt 5-15 Gew.-%, bezogen auf das Gewicht der Komponenten bi), bii), biii) und biv), eingesetzt.

Vorzugsweise weist die Komponente biii) eine Hydroxylzahl von 15 bis 60 mg KOH/g, besonders bevorzugt 25 bis 45 mg KOH/g, auf.

Die Funktionalität der Komponente biii) beträgt vorzugsweise 2 bis 5, bevorzugt 2 bis 4 und besonders bevorzugt 2 bis 3.

Vorzugsweise wird die Komponente biii) in einer Menge von 25 bis 40 Gew.-%, bezogen auf das Gewicht der Komponenten bi), bii), biii) und biv, eingesetzt.

In einer bevorzugten Ausführungsform der Erfindung besteht die die Komponente biii) zu mindestens 80 Gew.-%, bezogen auf das Gewicht der Komponente biii), aus Polyetheralkoholen mit einem Gehalt an Ethylenoxid im Polyetheralkohol von 10 bis 25 Gew.-%, bezogen auf das Gewicht des Polyetheralkohols. Vorzugsweise wird mindestens die Hälfte des Ethylenoxids am Kettenende angelagert. In einer besonders bevorzugten Ausführungsform wird die gesamte Menge an Ethylenoxid am Kettenende angelagert.

Die Komponente biii) besteht vorzugsweise aus Polyetheralkoholen, die einen Gehalt an primären Hydroxylgruppen von mindestens 50 %, bezogen auf die Gesamtzahl der Hydroxylgruppen, aufweisen.

Die Komponente biv) wird vorzugsweise in einer Menge von 1 - 8 Gew.-%, besonders bevorzugt von 3-5 Gew.-%, jeweils bezogen auf das Gewicht der Komponenten bi), bii), biii) und biv), eingesetzt.

Vorzugsweise besteht die Komponente b) nur aus den Bestanteilen bi), bii), biii) und biv). Es ist jedoch auch möglich, dass die Komponente b) noch weitere Bestandteile enthält.

Dabei kann es sich um von bi), bii), biii) und biv) verschiedene Polyetheralkohole handeln.

Weiterhin kann die Komponente b) auch so genannte Kettenverlängerer und Vernetzer enthalten. Dabei handelt es sich vorzugsweise um H-funktionelle Verbindungen mit Molekulargewichten von 62 bis 400 g/mol, insbesondere 2- bis 3-funktionelle Alkohole, Amine oder Aminoalkohole. Ihre Menge beträgt insbesondere 0 bis 25, vorzugsweise 2 bis 12 Gew.-%, bezogen auf das gewicht der Komponente b).

Als Polyisocyanate a) können prinzipiell alle bekannten Verbindungen mit mindestens zwei Isocyanatgruppen im Molekül eingesetzt werden. Vorzugsweise werden Diisocyanate eingesetzt. Bevorzugt kommen für das erfindungsgemäße Verfahren Diphenylmethandiisocyanat (MDI) und/oder Toluylendiisocyanat (TDI), vorzugsweise MDI, zum Einsatz.

Bei der Verwendung von MDI können das reine 4,4'-Isomere, das reine 2,4'-Isomere sowie beliebige Mischungen der beiden Isomeren untereinander, die auch bis zu 5 Gew.-% des 2,2'-Isomeren enthalten können, eingesetzt werden. An Stelle der reinen Isocyanate oder im Gemisch mit diesen werden häufig sogenannte modifizierte Isocyanate eingesetzt, da reines MDI als Feststoff schwierig zu verarbeiten ist. Derartige modifizierte Isocyanate können beispielsweise durch Einbau von Gruppen in die Polyisocyanate entstehen. Beispiele für derartige Gruppen sind Urethan-, Allophanat-, Carbodiimid-, Uretonimin-, Isocyanurat-, Harnstoff- und Biuretgruppen.

Besonders bevorzugt sind mit Urethangruppen modifizierte Polyisocyanate, die üblicherweise durch Umsetzung der Isocyanate mit einem Unterschuss an H-funktionellen Verbindungen hergestellt werden. Derartige Verbindungen werden häufig als NCO-Prepolymere bezeichnet. Diese Prepolymere haben vorzugsweise einen NCO-Gehalt von 20 bis 30 Gew.-, insbesondere von 24 bis 29 Gew.-%. Bei den zur Herstellung der Prepolymere eingesetzten H-funktionellen Verbindungen handelt es sich zumeist um mehrfunktionelle Alkohole, vorzugsweise um Polyetheralkohole. In einer Ausführungsform der Erfindung kann zur Herstellung der Prepolymere auch Rizinusöl eingesetzt werden. Dieses wird nicht mit zur Komponente bi) gerechnet.

Ebenfalls besonders bevorzugt sind Carbodiimid- oder Uretonimin-haltige Polyisocyanate, die durch gezielte katalysierte Umsetzung von Isocyanaten mit sich selber entstehen.

In einer weiteren Ausführungsform der Erfindung werden als Polyisocyanate a) Gemische aus Diphenylmethandiisocyanat und Polyphenylenpolymethylenpolyisocyanaten, auch als Roh-MDI bezeichnet, eingesetzt.

Die Herstellung der erfindungsgemäßen Polyurethan-Weichschaumstoffe erfolgt üblicherweise in Anwesenheit von Treibmitteln, Katalysatoren und Hilfs- und/oder Zusatzstoffen.

Als Treibmittel wird vorzugsweise Wasser eingesetzt. Die Menge des eingesetzten Wassers richtet sich nach der angestrebten Dichte des Schaumstoffs und liegt vorzugsweise im Bereich zwischen 1 - 5 Gew.-%, bezogen auf das Gewicht der Komponente b).

An Stelle von oder gemeinsam mit dem Wasser können auch so genannte physikalisch wirkende Treibmittel eingesetzt werden. Hierbei handelt es sich vorzugsweise um gegenüber den Polyurethan-Aufbaukomponenten inerte Flüssigkeiten mit Siedepunkten unter 100°C, vorzugsweise unter 50°C, insbesondere im Bereich zwischen 50 und 30°C, die unter dem Einfluss der exothermen Polyadditionsreaktion verdampfen. Beispiele für derartige Flüssigkeiten sind Kohlenwasserstoffe, wie n-, Iso- und/oder Cyclopentan, Ether, Ketone, halogenierte Kohlenwasserstoffe, sofern sie kein Ozonabbaupotential aufweisen. Weiterhin können als physikalische Treibmittel gegenüber den Polyurethan-Aufbaukomponenten inerte Gase, wie Stickstoff oder Edelgase, insbesondere jedoch Kohlendioxid, eingesetzt werden. Die Menge der flüssigen physikalisch wirkenden Treibmittel beträgt zumeist 1 bis 20 Gew.-Teile, vorzugsweise 2 bis 15 Gew.-Teile, bezogen auf 100 Gew.-Teile der Verbindung mit mindestens 2 mit Isocyanat reaktiven Wasserstoffatomen. Die Menge der eingesetzten Treibmittel hängt von der angestrebten Dichte der Schaumstoffe ab.

Zur Durchführung der Umsetzung werden zumeist die üblichen Polyurethan-Katalysatoren eingesetzt. Hierbei handelt es sich beispielsweise um tertiäre Amine, wie Triethylendiamin, Metallsalze, wie Zinnverbindungen, sowie beliebige Mischungen aus diesen Verbindungen.

Als Hilfsmittel und/oder Zusatzstoffe werden beispielsweise Flammschutzmittel, oberflächenaktive Stoffe, Stabilisatoren, Zellregler, fungistatisch und bakteriostatisch wirkende Substanzen, Antistatika, Farbstoffe, Pigmente und Füllstoffe verwendet. Diese Stoffe werden dem Schaumsystem bei Bedarf zugesetzt, um ihm bestimmte Eigenschaften zu verleihen.

Nähere Angaben zu den verwendeten Komponenten sind beispielsweise dem Kunststoff-Handbuch, Band VII Polyurethane, Carl Hanser Verlag, München, Wien, 1. bis 3. Auflage, 1966, 1983 und 1993 zu entnehmen.

Üblicherweise werden die Verbindungen mit mindestens zwei mit Isocyanatgruppen reaktiven Wasserstoffatomen b), die Treibmittel, die Katalysatoren sowie die gegebenenfalls mitverwendeten Hilfsmittel und/oder Zusatzstoffe zu einer sogenannten Polyolkomponente vermischt und in dieser Form mit den Polyisocyanaten a) zur Umsetzung gebracht.

Zur Herstellung der erfindungsgemäßen Polyurethan-Weichschaumstoffe werden die Ausgangsverbindungen zumeist bei Temperaturen von 0 bis 100°C, vorzugsweise 15 bis 60°C, in solchen Mengenverhältnissen zur Reaktion gebracht, dass pro NCO-Gruppe 0,5 bis 2, vorzugsweise 0,6 bis 1,3 und insbesondere 0,7 bis 1 reaktive(s) Wasserstoffatom(e) vorliegen und, bei der Verwendung von Wasser als Treibmittel, die beiden Wasserstoffatome des Wassers in die Gesamtzahl der reaktiven Wasserstoffatome mit einberechnet werden.

Die erfindungsgemäßen Polyurethan-Weichschaumstoffe werden vorzugsweise nach dem one-shot-Verfahren durch Vermischen der Polyol- und der Isocyanatkomponente hergestellt, wobei die Polyolkomponente, wie beschrieben, die Verbindungen mit mindestens zwei mit Isocyanat reaktiven Wasserstoffatomen, gegebenenfalls Katalysatoren, Treibmittel sowie Hilfs- und/oder Zusatzstoffe und die Isocyanatkomponente das Polyisocyanat sowie gegebenenfalls Katalysatoren, physikalische Treibmittel sowie Hilfs- und/oder Zusatzstoffe enthält. Die beiden Komponenten werden intensiv vermischt und zumeist als Formschaum verschäumt. Hierbei kommt es in der Polyolkomponente zu keinen Verträglichkeitsproblemen und zu keiner Entmischung.

Wie beschrieben, handelt es sich bei den erfindungsgemäßen Schaumstoffen um viskoelastische Schaumstoffe. Die Eigenschaften dieser Schaumstoffe sind oben beschrieben. Die erfindungsgemäßen Schaumstoffe weisen ebenfalls diese oben beschriebenen Merkmale auf.

Die erfindungsgemäßen Schaumstoffe werden insbesondere für dämmende und dämpfende Elemente, insbesondere im Fahrzeugbau, für Polster-, Sitz- oder Liegemöbei, für Matratzen oder Kissen im orthopädischen und/oder medizinischen Bereich oder für Schuh(einlege)sohlen eingesetzt. Ein weiteres Einsatzgebiet sind Autosicherheitsteile, Auflageflächen, Armlehnen und ähnliche Teile im Möbelbereich und im Automobilbau

Die Erfindung soll an den nachfolgenden Beispielen näher beschrieben werden.
Polyol 1: Mit Glyzerin gestartetes Polyoxypropylen-polyoxyethylen-Polyol, Hydroxylzahl 26 mg KOH/g, Ethylenoxidgehalt 21 Gew.-%, bezogen auf das Polyol, als Endblock
Polyol 2: Mit Glyzerin gestartetes Polyoxypropylen-polyoxyethylen-Polyol, Hydroxylzahl 42 mg KOH/g, Ethylenoxidgehalt 72 Gew.-%, bezogen auf das Polyol, davon 5 Gew.-%, bezogen auf das Polyol als Endblock
Polyol 3: Mit Ethylendiamin gestartetes Polyoxypropylen-Polyol, Hydroxylzahl 470 mg KOH/g
Tegostab® B 8716LF: Siliconstabilisator, Evonik
Tegostab® B 4113: Siliconstabilisator, Evonik
Lupragen® N 201: Diazabicyclooktan, 33%ig in Dipropylenglykol, BASF SE
Lupragen® N 206: Bis(N,N-dimethylaminoethyl)ether, 70 %ig in Dipropylenglykol, BASF SE
Niax® A 107 : Aminkatalysator, Momentive

Aus den in der Tabelle angegebenen Polyolen, Katalysatoren und Zusatzstoffen wurde durch Mischung eine homogene Polyolkomponente hergestellt. Die angegebenen Mengen sind Gewichtsprozente.

Die Polyolkomponente wurde mit der MDI-basierten Isocyanat-Komponente bei dem angegebenen Index intensiv vermischt und die Mischung in eine auf 55°C beheizte an einer Seite abgeschrägten Metallform mit einem Volumen von 14,5 Litern und den Abmessungen 40*40*10 cm gegeben, worin es nach verschließen des Deckels für 8-10 Minuten zum Weichschaum aushärtete. Im Beispiel 1 erfolgte die Vermischung der Polyolkomponente und der MDI-Komponente im Handansatz. In den Beispielen 2-4 erfolgte die Vermischung der Polyolkomponente und der MDI-Komponente maschinell mit einem Hochdruckpuromaten mit der Bezeichnung PU SV 20/3 der Firma Elastogran Maschinenbau GmbH.

| | Beispiel 1 (6) | Beispiel 2 (11) | Beispiel 3 (13) | Beispiel 4 (15) |
|---|---|---|---|---|
| Rizinusöl, Qualität DAB | 50 | 50 | 50 | 50 |
| Polyol 1 | 32,65 | 32,65 | 32,65 | 32,65 |
| Polyol 2 | 5 | 5 | 5 | 5 |
| Polyol 3 | 5 | 5 | 5 | 5 |
| 1,4 Butandiol | 5 | 5 | 5 | 5 |
| Tegostab B 8716LF | | 0,3 | 0,3 | 0,3 |
| Tegostab B 4113 | 0,3 | - | - | |
| Lupragen N 201 | 0,25 | 0,25 | 0,25 | 0,25 |
| Lupragen N 206 | 0,3 | | - | |
| Niax A 107 | | 0,3 | 0,3 | 0,3 |
| Wasser | 1,5 | 1,5 | 1,5 | 1,5 |
| Index | 70 | 70 | 65 | 75 |
| Entformzeit in min | 10 | 8 | 8 | 8 |
| Formtemperatur in °C | 55 | 55 | 55 | 55 |
| Formgröße in I | 14,5 | 14,5 | 14,5 | 14,5 |
| Kissengewicht in g | 1198 | 978 | 1172 | 1180 |
| Raumgewicht in kg/m³ | 83 | 67 | 81 | 82 |
| Bemerkung | klebfrei | klebfrei | klebfrei | klebfrei |
| Verarbeitung | Hand | Maschine | Maschine | Maschine |
| Stauchhärte 40 % in kPa | 1,8 | 1,4 | 1,3 | 3,3 |
| DVR in % | 8,9 | 6,2 | 6,9. | 5,0 |
| Rückprallelastizität in % | 16 | 17 | 16. | 14 |
| tan delta bei 25°C | 0,27 | 0,31 | 0,25 | 0,34 |
| tan delta bei -20°C | 0,52 | 0,53 | 0,54 | 0,38 |
| tan delta bei 50°C | 0,21 | 0,2 | 0,15 | 0,21 |
| Anteil nachwachsende Rohstoffe in Gew.-% im Schaumstoff | 34,5 | 34,5 | 35,2 | 33,7 |

Als Isocyanatkomponente wurde Iso 145/8 der Elastogran GmbH auf Basis eines Gemisches aus Diphenylmethandiisocyanaten und Polyphenylenpolymethylenpolyisocyanaten verwendet. Der NCO-Gehalt beträgt 32,8 %.

Die angegebenen Kennwerte wurden nach den genannten Normen bestimmt:

| | |
|---|---|
| Raumgewicht in kg/m³ | DIN EN ISO 845 |
| Stauchhärte, 40 % Verformung in kPa | DIN EN ISO 2439 |
| Rückprall-Elastizität in % | DIN EN ISO 8307 |
| Druckverformungsrest in % | DIN EN ISO 3386 |
| Verlustfaktor tan delta: | Torsionsschwingungsversuch nach DIN 53445 |

Die Beurteilung der Klebrigkeit erfolgte, indem unmittelbar nach dem Entformen an der Oberfläche des frischen Schaumstoffes durch Handauflegen überprüft wurde, ob die Oberfläche klebrig ist.

## Patentansprüche

1. Verfahren zur Herstellung von viskoelastischen Polyurethan-Weichschaumstoffen durch Umsetzung von
a) Polyisocyanaten mit
b) Verbindungen mit mindestens zwei mit Isocyanatgruppen reaktiven Wasserstoffatomen; **dadurch gekennzeichnet, dass** als Verbindungen mit mindestens zwei mit Isocyanatgruppen reaktiven Wasserstoffatomen eine Mischung aus
bi) 25 bis 70 Gew.-%, bezogen auf das Gewicht der Komponenten bi) bii), biii) und, biv) Rizinusöl,
bii) 3 bis 30 Gew.-%, bezogen auf das Gewicht der Komponenten bi), bii), biii) und biv), mindestens eines Polyetheralkohols mit einer Hydroxylzahl von 100 bis 800 mg KOH/g und einer Funktionalität von 3 bis 5, das ausgewählt ist aus der Gruppe von Polyetheralkoholen, hergestellt durch Anlagerung von Alkylenoxiden an ein Amin,
biii) 20-50 Gew.-%, bezogen auf das Gewicht der Komponenten bi), bii), biii) und biv), mindestens eines Polyetheralkohols mit einer Hydroxylzahl von 10 bis 80 mg KOH/g und einer Funktionalität von 2 bis 5, herstellbar durch Anlagerung von Ethylenoxid und Propylenoxid an H-funktionelle Startsubstanzen, wobei der Anteil an Ethylenoxid 5-25 Gew.-%, bezogen auf das Gewicht des Polyetheralkohols, beträgt; wobei zumindest ein Teil des Ethylenoxids am Ende der Polyetherketteangelagert ist,
biv) >0 - 8 Gew.-%, bezogen auf das Gewicht der Komponenten bi), bii), biii) und biv), mindestens eines Polyetheralkohols mit einer Funktionalität von 2-4, einer Hydroxylzahl von 15-60 mg KOH/g und einem Gehalt an Ethylenoxid von >50 Gew.-%, bezogen auf das Gewicht des Polyetheralkohols,
eingesetzt wird.

2. Verfahren nach Anspruch 1, **dadurch gekennzeichnet, dass** die Komponente bi) in einer Menge von 30-60 Gew.-%. bezogen auf das Gewicht der Komponenten bi), bii), biii) und biv), eingesetzt wird.

3. Verfahren nach Anspruch 1, **dadurch gekennzeichnet, dass** die Komponente bii) eine Hydroxylzahl im Bereich von 150 bis 500 mg KOH/g aufweist.

4. Verfahren nach Anspruch 1, **dadurch gekennzeichnet, dass** die Komponente bii) in einer Menge von 3 bis 20 Gew.-%, bezogen auf das Gewicht der Komponenten bi), bii), biii) und biv), eingesetzt wird.

5. Verfahren nach Anspruch 1, **dadurch gekennzeichnet, dass** die Komponente biii) eine Hydroxylzahl von 2 bis 60 mg KOH/g aufweist.

6. Verfahren nach Anspruch 1, **dadurch gekennzeichnet, dass** die Komponente biii) in einer Menge von 25 bis 40 Gew.-%, bezogen auf das Gewicht der Komponenten bi), bii), biii) und biv), eingesetzt wird.

7. Verfahren nach Anspruch 1, **dadurch gekennzeichnet, dass** die Komponente biv) in einer Menge von 1-8 Gew.-%, bezogen auf das Gewicht der Komponenten bi), bii), biii) und biv), eingesetzt wird.

8. Verfahren nach Anspruch 1, **dadurch gekennzeichnet, dass** die Komponente biv) einem Gehalt an Ethylenoxid von >70 Gew.-%, bezogen auf das Gewicht des Polyetheralkols, aufweist.

9. Verfahren nach Anspruch 1, **dadurch gekennzeichnet, dass** als Polyisocyanat a) Diphenylmethandiisocyanat eingesetzt wird.

10. Verfahren nach Anspruch 1, **dadurch gekennzeichnet, dass** als Polyisocyanat a) Gemische aus Diphenylmethandiisocyanat und Polyphenylenpolymethylenpolyisocyanaten eingesetzt werden.

11. Verfahren nach Anspruch 1, **dadurch gekennzeichnet, dass** als Polyisocyanat a) Isocyanatgruppen und Urethangruppen enthaltende Umsetzungsprodukte aus Diphenylmethandiisocyanat und Verbindungen mit mit Isocyanatgruppen reaktiven Wasserstoffatomen eingesetzt werden.

12. Verfahren nach Anspruch 11, **dadurch gekennzeichnet, dass** als Verbindung mit mit Isocyanatgruppen reaktiven Wasserstoffatomen Rizinusöl eingesetzt wird.

13. Verfahren nach Anspruch 1, **dadurch gekennzeichnet, dass** die Umsetzung in Gegenwart von Treibmitteln durchgeführtwird.

14. Verfahren nach Anspruch 13, **dadurch gekennzeichnet, dass** als Treibmittel wasser eingesetzt wird

15. Polyurethan-Weichschaumstoffe, herstellbar nach einem der Anspruche 1 bis 14.

## Claims

1. A process for producing viscoelastic flexible polyurethane foams by reacting
a) polyisocyanates with
b) compounds having at least two hydrogen atoms which are reactive toward isocyanate groups, wherein a mixture of
bi) from 25 to 70% by weight, based on the weight of the components bi), bii), biii) and biv), of castor oil,
bii) from 3 to 30% by weight, based on the weight of the components bi), bii), biii) and biv), of at least one polyether alcohol which has a hydroxyl number of from 100 to 800 mg KOH/g and a functionality of from 3 to 5 and is selected from the group consisting of polyether alcohols prepared by addition of alkylene oxides onto an amine,
biii) 20-50% by weight, based on the weight of the components bi), bii), biii) and biv), of at least one polyether alcohol which has a hydroxyl number of from 10 to 80 mg KOH/g and a functionality of from 2 to 5 and can be prepared by addition of ethylene oxide and propylene oxide onto H-functional starter substances, where the proportion of ethylene oxide is 5-25% by weight, based on the weight of the polyether alcohol, and at least part of the ethylene oxide is added on at the end of the polyether chain,
biv) > 0-8% by weight, based on the weight of the components bi), bii), biii) and biv), of at least one polyether alcohol having a functionality of 2-4, a hydroxyl number of 15-60 mg KOH/g and a content of ethylene oxide of
> 50% by weight, based on the weight of the polyether alcohol,
is used as compounds having at least two hydrogen atoms which are reactive toward isocyanate groups.

2. The process according to claim 1, wherein the component bi) is used in an amount of 30-60% by weight, based on the weight of the components bi), bii), biii) and biv).

3. The process according to claim 1, wherein the component bii) has a hydroxyl number in the range from 150 to 500 mg KOH/g.

4. The process according to claim 1, wherein the component bii) is used in an amount of from 3 to 20% by weight, based on the weight of the components bi), bii), biii) and biv).

5. The process according to claim 1, wherein the component biii) has a hydroxyl number of from 2 to 60 mg KOH/g.

6. The process according to claim 1, wherein the component biii) is used in an amount of from 25 to 40% by weight, based on the weight of the components bi), bii), biii) and biv).

7. The process according to claim 1, wherein the component biv) is used in an amount of 1-8% by weight, based on the weight of the components bi), bii), biii) and biv).

8. The process according to claim 1, wherein the component biv) has a content of ethylene oxide of >70% by weight, based on the weight of the polyether alcohol.

9. The process according to claim 1, wherein diphenylmethane diisocyanate is used as polyisocyanate a).

10. The process according to claim 1, wherein mixtures of diphenylmethane diisocyanate and polyphenylenepolymethylene polyisocyanates are used as polyisocyanate a).

11. The process according to claim 1, wherein isocyanate group- and urethane group-comprising reaction products of diphenylmethane diisocyanate and compounds having hydrogen atoms which are reactive toward isocyanate groups are used as polyisocyanate a).

12. The process according to claim 11, wherein castor oil is used as compound having hydrogen atoms which are reactive toward isocyanate groups.

13. The process according to claim 1, wherein the reaction is carried out in the presence of blowing agents.

14. The process according to claim 13, wherein water is used as blowing agent.

15. A flexible polyurethane foam which can be produced according to any of claims 1 to 14.

## Revendications

1. Procédé pour la production de mousses souples de polyuréthane viscoélastiques, par mise en réaction
a) de polyisocyanates avec
b) des composés comportant au moins deux atomes d'hydrogène réactifs avec des groupes isocyanate, **caractérisé en ce qu'**on utilise comme composés comportant au moins deux atomes d'hydrogène réactifs avec des groupes isocyanate un mélange de
bi) 25 à 70 % en poids, par rapport au poids des composants bi), bii), biii) et biv), d'huile de ricin,
bii) 3 à 30 % en poids, par rapport au poids des composants bi), bii), biii) et biv), d'au moins un polyétheralcool ayant un indice de groupes hydroxy de 100 à 800 mg de KOH/g et une fonctionnalité de 3 à 5, qui est choisi dans le groupe des polyétheralcools, préparé par fixation par addition d'oxydes d'alkylène sur une amine,
biii) 20-50 % en poids, par rapport au poids des composants bi), bii), biii) et biv), d'au moins un polyétheralcool ayant un indice de groupes hydroxy de 10 à 80 mg de KOH/g et une fonctionnalité de 2 à 5, pouvant être préparé par fixation par addition d'oxyde d'éthylène et d'oxyde de propylène sur des substances de départ à fonction H, la proportion d'oxyde d'éthylène valsant 5-25 % en poids, par rapport au poids du polyétheralcool, au moins une partie de l'oxyde d'éthylène étant fixée à l'extrémité de la chaîne polyéther,
biv) >0 - 8 % en poids, par rapport au poids des composants bi), bii), biii) et biv), d'au moins un polyétheralcool ayant une fonctionnalité de 2-4, un indice de groupes hydroxy de 15-60 mg de KOH/g et une teneur en oxyde d'éthylène de >50 % en poids, par rapport au poids du polyétheralcool.

2. Procédé selon la revendication 1, **caractérisé en ce que** le composant bi) est utilisé en une quantité de 30-60 % en poids, par rapport au poids des composants bi), bii), biii) et biv).

3. ce Procédé selon la revendication 1, **caractérisé en ce que** le composant bii) présente un indice de groupes hydroxy dans la plage de 150 à 500 mg de KOH/g.

4. Procédé selon la revendication 1, **caractérisé en ce que** le composant bii) est utilisé en une quantité de 3 à 20 % en poids, par rapport au poids des composants bi), bii), biii) et biv).

5. Procédé selon la revendication 1, **caractérisé en ce que** le composant biii) présente un indice de groupes hydroxy de 2 à 60 mg de KOH/g.

6. Procédé selon la revendication 1, **caractérisé en ce que** le composant biii) est utilisé en une quantité de 25 à 40 % en poids, par rapport au poids des composants bi), bii), biii) et biv).

7. Procédé selon la revendication 1, **caractérisé en ce que** le composant biv) est utilisé en une quantité de 1-8 % en poids, par rapport au poids des composants bi), bii), biii) et biv).

8. Procédé selon la revendication 1, **caractérisé en ce que** le composant biv) présente une teneur en oxyde d'éthylène de > 70 % en poids, par rapport au poids du polyétheralcool.

9. Procédé selon la revendication 1, **caractérisé en ce qu'**on utilise comme polyisocyanate a) le diphénylméthane-diisocyanate.

10. Procédé selon la revendication 1, **caractérisé en ce qu'**on utilise comme polyisocyanate a) des mélanges de diphénylméthane-diisocyanate et polyphénylènepolyméthylène-polyisocyanates.

11. Procédé selon la revendication 1, **caractérisé en ce qu'**on utilise comme polyisocyanate a) des produits de réaction, contenant des groupes isocyanate et des groupes uréthanne, de diphénylméthane-diisocyanate et de composés comportant des atomes d'hydrogène réactifs avec des groupes isocyanate.

12. Procédé selon la revendication 11, **caractérisé en ce qu'**on utilise comme composé comportant des atomes d'hydrogène réactifs avec des groupes isocyanate l'huile de ricin.

13. Procédé selon la revendication 1, **caractérisé en ce qu'**on effectue la réaction en présence d'agents d'expansion.

14. Procédé selon la revendication 13, **caractérisé en ce qu'**on utilise l'eau comme agent d'expansion.

15. Mousses souples de polyurethane, pouvant être produites selon l'une quelconque des revendications 1 à 14.
